# EUROPÄISCHE PATENTSCHRIFT

(11) **EP 1 171 227 B1**
(45) Veröffentlichungstag und Bekanntmachung des Hinweises auf die Patenterteilung: **18.06.2003**
(21) Anmeldenummer: 00918836.8
(22) Anmeldetag: 25.03.2000
(51) Int. Cl.: B01F 3/08, B01F 5/06, B01F 11/02, B01L 3/00, B01J 19/00

(54) **VERFAHREN UND MIKROVERMISCHER ZUR HERSTELLUNG EINER DISPERSION**
METHOD AND MICROMIXER FOR PRODUCING A DISPERSION
PROCEDE ET MICROMELANGEUR POUR LA REALISATION D'UNE DISPERSION

(30) Priorität: 16.04.1999 DE 19917148
(43) Veröffentlichungstag der Anmeldung: 16.01.2002
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); HESSEL, Volker, D-65510 Hünstetten-Wallbach (DE); SCHIEWE, Jörg, D-55129 Mainz (DE)
(74) Vertreter: Fuchs Mehler Weiss & Fritzsche
(86) Internationale Anmeldenummer: EP0002655
(87) Internationale Veröffentlichungsnummer: WO00062913

(56) Entgegenhaltungen:
- WO-A-98/32526
- DE-A- 4 226 850
- DE-A- 4 304 260
- DE-A- 19 705 364
- US-A- 4 259 021
- US-A- 4 908 154
- PATENT ABSTRACTS OF JAPAN vol. 014, no. 513 (C-0777), 9. November 1990 (1990-11-09) & JP 02 214537 A (FUJI DEBUISON KAGAKU KK), 27. August 1990 (1990-08-27)

## Beschreibung

Dispersionen zweier oder mehr Fluide, insbesondere flüssig-flüssig Dispersionen (Emulsionen) und Gas-flüssig Dispersionen, spielen in vielen Bereichen, wie der Zubereitung von Arzneimitteln, Kosmetika und Lebensmitteln, aber auch in der chemischen Verfahrenstechnik, beispielsweise bei Mehrphasenreaktionen, eine große Rolle.

In jüngster Zeit konnten Mikrovermischer erfolgreich zur Herstellung von Dispersionen eingesetzt werden. In *V. Hessel, et al., Gas*/*Liquid Dispersion Processes in Micromixers: The Hexagonal Flow, in Process Miniaturization: 2nd International Conference on Microreaction Technology, New Orleans, 1998* sowie *W. Ehrfeld et al., Anwendungspotentiale chemischer und biologischer Mikroreaktoren, in Jahrbuch 1997 - Verfahrenstechnik und Chemieingenieurwesen, VDI-GVC 1997* wurden hierfür geeignete miniaturisierte statische Vermischer mit kapillarartigen Kanälen beschrieben. Mittels solcher miniaturisierten Mischer konnten auch stabile gerahmte Emulsionen speziell aus Silikonöl mit Wasser oder einer wäßrigen Farbstofflösung erzeugt werden (*V. Hessel, et al., Mehrphasenprozesse in Mikroreaktoren - Konzept, Systeme und Charakterisierung, in Chemie Ingenieur Technik 1998, 9, 1074 sowie W. Ehrfeld, et al., Mikroreaktoren - eine Herausforderung für die Verfahrenstechnik in Chemie und Biotechnologie, in GIT Labor-Fachzeitschrift 1998, 4, 346 - 350*). Hierbei wird das Prinzip der Multilamination ausgenutzt, bei dem die Fluidströme jeweils in eine Vielzahl von Fluidlamellen aufgespalten, abwechselnd nebeneinander angeordnet und zusammengeführt werden. Beim Zusammenführen der Fluide kommt es zur Fragmentation eines Fluids oder beider Fluide in Flüssigkeitströpfchen bzw. Gasblasen, wobei die Größe der entstehenden Fluidteilchen sowie deren Größenverteilung im wesentlichen von der Strömungsgeschwindigkeit der Fluide und der konstruktiven Ausgestaltung des verwendeten Mikrovermischers abhängt. Wesentlicher Nachteil dieser bekannten Verfahren zur Herstellung von Dispersionen unter Verwendung von Mikrovermischern ist jedoch, dass bei gegebener Strömungsgeschwindigkeit der Fluide die Breite der Teilchengrößenverteilung und die Lage des Maximums der Verteilung nicht unmittelbar eingestellt werden kann.

Verfahren und Vorrichtungen zur Herstellung von Emulsionen sind darüber hinaus bekannt geworden aus JP-A-022 14 537, DE-A-43 04 260 und DE-A-197 05 364. Dieser Stand der Technik offenbart eine Einflussnahme auf das Dispergieren durch mechanische Schwingungen derart, dass die disperse Phase durch die mechanischen Schwingungen direkt bei der Entstehung am Disperglerorgan abgerissen wird.

Ausgehend vom aufgeführten Stand der Technik ist es daher Aufgabe der Erfindung ein Verfahren zur Herstellung einer Dispersion mindestens zweier Fluide A und B bereitzustellen, bei dem die Größenverteilung der die Dispersion bildenden Teilchen und die Lage des Maximums der Verteilung bei gegebener Strömungsgeschwindigkeit der Fluide beeinflussbar ist. Weiterhin ist es die Aufgabe der Erfindung einen Mikrovermischer vorzuschlagen, der die Durchführung dieses Verfahrens ermöglicht

Die genannte Aufgabe wird dadurch gelöst, dass zunächst ein Fluidstrom des Fluids A in räumlich voneinander getrennte Fluidlamellen aufgespalten wird. Anschließend werden diese Fluidlamellen mit mindestens einem Fluidstrom des Fluids B zusammengeführt. Hierbei wird die Fragmentation des Fluids A oder/und des Fluids B in die Dispersion bildende Fluid-Teilchen, wie Tröpfchen oder Blasen, durch mechanische Schwingungen unterstützt, die derart erfolgen, dass eine periodische Auslenkung senkrecht zur Strömungsrichtung der Fluidlamellen des Fluids A und/oder des Fluids B bewirkt wird. Als miteinander zu kombinierende Phasen der beiden, in unter den betreffenden Bedingungen und Konzentrationen nicht miteinander mischbaren Fluide kommen insbesondere die Kombinationen flüssig-flüssig und gasförmig flüssig in Frage. Nach dem Verfahren ist es auch denkbar Dispersionen aus drei oder mehr Fluiden zu erzeugen.

Die Verwendung von Ultraschallschwingern zur Herstellung von Dispersionen ist beispielsweise aus der DE 196 12 349 A1 bekannt. Gemäß dieser Verfahren wird zunächst eine Vordispersion erzeugt, wobei Hochdrucksysteme mit Gegenstrahl-Injektor eingesetzt werden können. Die so erhaltene Vordlspersion wird in eine Kammer geleitet und dort mit Ultraschallschwingungen beaufschlagt, wozu die Kammer speziell angepasst ist. Ziel dieser Verfahren ist die Steigerung der geringen Effektivität und Homogenität bekannter nach dem Prinzip der Turbulenz arbeitender Mischer, wie Hochdruck- oder Rotor-Statorsystemen. Eine Beeinflussung des Vorgangs der Fragmentation selbst kann mit diesen zweistufigen Verfahren jedoch nicht erzielt werden.

Das Beaufschlagen mit mechanischen Schwingungen nach dem erfindungsgemäßen Verfahren ermöglicht es dagegen, den Vorgang der Fluid-Fragmentation gezielt beeinflussen zu können. Hierdurch kann zum einen eine engere Verteilung der Teilchengröße erreicht werden. Zum anderen kann auch die Lage des Maximums dieser Verteilung beeinflußt werden. Durch das Verfahren wird es daher möglich, bei vorliegendem Mikrovermischer und gegebenen Strömungsgeschwindigkeiten je nach Anwendungsfall aus den gleichen Fluiden A und B gezielt unterschiedliche Dispersionen herzustellen.

Nach einer bevorzugten Variante werden beide Fluidströme in Fluidlamellen aufgespalten und anschließend jeweils eine Fluidlamelle des Fluids A mit jeweils mindestens einer Fluidlamelle des Fluids B zusammengeführt. Dies ermöglicht beispielsweise ein gezieltes Zusammenführen einzelner Fluidlamellen. So kann es vorteilhaft sein, jeweils eine Fluidlamelle des Fluids A sowie mindestens eine Fluidlamelle des Fluids B in einen gemeinsamen Kanal zu leiten. Hierbei wird jeweils ein Dispersionsteilstrom gebildet. Die Dispersionsteilströme werden zu einem Dispersionsstrom zusammengeführt.

Vorteilhaft werden mehrere Fluidlamellen des Fluids A und mehrere Fluidlamellen des Fluids B derart gemeinsam in einen Raum geleitet, daß jeweils eine Fluidlamelle des Fluids A benachbart mit mindestens einer Fluidlamelle des Fluids B in diesen Raum austritt. Diese Führung der Fluidlamellen entspricht der bekannter Mikrovermischer (V. Hessel, a. a. O.).

Die Fluidlamellen können auch derart schachbrettartig zueinander versetzt in den Raum geleitet werden, daß jede Fluidlamelle einer Art von beispielsweise vier Fluidlamellen anderer Art umgeben ist und umgekehrt. Die resultierende Dispersion wird kontinuierlich aus dem Raum abgeleitet. Hierfür geeignete miniaturisierte Mischer werden beispielsweise in der EP 0 758 918 B1 zur Durchführung chemischer Reaktionen beschrieben.

Die Strömungsrichtung einer Fluidlamelle kann im wesentlichen gleichgerichtet mit oder entgegengerichtet der Strömungsrichtung des Fluidstroms oder der Fluidlamelle des anderen Fluids sein, in den bzw. die die Fluidlamelle geleitet wird. Es ist jedoch auch denkbar, eine Fluidlamelle in einem Winkel von 0° bis 180° dem Fluidstrom bzw. der Fluidlamelle zuzuleiten.

Sind die Strömungsrichtungen im wesentlichen entgegengerichtet zueinander, so wird der resultierende Dispersionsstrom bevorzugt im wesentlichen senkrecht zu den beiden Strömungsrichtungen abgeleitet. Hierfür besonders geeignete Mikromischer werden beispielsweise beschrieben in:
V. Hessel et al., Potentials and Realisation of Microreactors, Proc. of Intemat. Symposiom of Microsystems, Intelligent Materials and Robots, Sendai, Japan, Sept. 1995 sowie V. Hessel, et al., Characterization of mixing in micromixers by a test reaction: Single mixing units and mixer arrays, Industrial and Engineering Chemistry Research 1999, (38) 3, 1075-1082.

Zur Herstellung von Dispersionen weisen die Fluidlamellen des Fluids A oder/und des Fluids B vorteilhaft eine Breite < 300 µm, besonders vorteilhaft < 50 µm, auf. Bevorzugt ist die Höhe der entsprechenden Fluidlamellen größer gleich ihrer Breite, besonders bevorzugt > 300 µm. Aufgrund der im Vergleich zur Breite größeren Höhe kann bei im wesentlichen gleicher Größenverteilung der die Dispersion bildenden Teilchen ein größerer Stoffdurchsatz erzielt werden.

Bevorzugt wird die Fragmentation durch mechanische Schwingungen derart unterstützt, daß zumindest Bereiche der Fluidströme oder/ und der Fluidlamellen des Fluids A oder/ und des Fluids B oder/ und des Dispersionsstromes mechanisch mit Schwingung beaufschlagt werden. Besonders bevorzugt werden Bereiche der Fluidlamellen des Fluids A oder/und des Fluids B beaufschlagt. Bereiche der Fluidlamellen umfassen Bereiche, in denen die Bildung der Fluidlamellen erfolgt, und/oder Bereiche, in denen Fluidlamellen unterschiedlicher Art zusammengeführt werden. Hierzu wird vortellhaft das Teil eines Mikrovermischers mit Schwingungen beaufschlagt, in dem die Bildung der Fluidlamellen erfolgt oder/und In dem die Fluidlamellen unterschiedlicher Art zusammengeführt werden.

Die Frequenz der mechanischen Schwingungen wird bei gegebener Strömungsgeschwindigkeit des Fluids A und/oder des Fluids B im Hinblick auf die zu erzielende Teilchengröße gewählt. Dies wird dadurch ermöglicht, dass durch die mechanische Schwingung der Vorgang der Fragmentation gezielt eingeleitet wird. Hierdurch wird zum einen bei gegebener Schwingungsfrequenz eine enge Größenverteilung der Teilchen erzielt, zum anderen kann mit Erhöhung oder Erniedrigung der Schwingungsfrequenz das Maximum der Größenverteilung hin zu kleineren bzw. größeren Teilchen verschoben werden.

Bevorzugt sind mechanische Schwingungen im Frequenzbereich von 1 kHz bis 100 kHz, besonders bevorzugt im Bereich von 10 kHz bis 50 kHz.

Nach dem Verfahren wird bevorzugt eine Dispersion mit Teilchen des Fluids A oder/und Fluids B mit einer Größe von überwiegend 0,1 bis 100 µm, ganz besonders bevorzugt von 0,1 bis 10 µm, hergestellt. Solche Emulsionen weisen vorteilhaft eine Standardabweichung der Teilchengrößen < 5 µm auf. Besonders vorteilhaft beträgt die Standardabweichung kleiner gleich der mittleren Größe der Teilchen in µm.

Der erfindungsgemäße Mikrovermischer weist ein Gehäuse mit mindesten zwei Einlässen für die Fluide A und B sowie mindestens einen Auslaß für die Dispersion auf. Darüber hinaus weist der Mikrovermischer mindestens ein Mischelement mit einer Struktur zum Aufspalten mindestens des Fluidstroms des Fluids A in Fluidlamellen auf. Weiterhin umfasst der Mikrovermischer mindestens einen Vermischungsbereich zum Zusammenführen der Fluidlamellen des Fluids A mit dem Fluidstrom des Fluids B und mindestens einen mechanischen Schwingungsgeber zur Unterstützung der Fragmentation des Fluids A oder/und des Fluids B in die Dispersion bildende Teilchen, der den Teil des Mikrovermischers mit Schwingungen beaufschlagt, In dem die Bildung der Fluidlamellen erfolgt und/oder In dem die Fluidlamellen unterschiedllcher Art zusammengeführt werden.

Hierdurch wird vorteilhaft eine gezielte Beeinflussung bereits des Vorgangs der Fragmentation und damit der Verteilung der Teilchengröße sowie der Lage des Maximums der Verteilung ermöglicht.

Vorteilhaft weist das Mischelement ebenfalls eine Struktur zum Aufspalten des Fluidstroms des Fluids B In Fluidlamellen auf, wobei der Vermischungsbereich zum Zusammenführen von Fluidlamellen des Fluids A mit Fluidlamellen des Fluids B ausgebildet ist.

In einer bevorzugten Ausführungsform hierzu weist das Mischelement eine aus Kanälen für die Führung der Fluidlamellen des Fluids A und des Fluids B gebildete Interdigitalstruktur auf.

Das Mischelement ist vorteilhaft über ein Element, das einen quer zu den Fluidlamellen angeordneten Spalt aufweist, mit dem Vermischungsbereich verbunden. Dieses Element Ist beispielsweise eine dünne, mit einem Schlitz versehene Folie. Das Element mit dem Spalt kann auch einstückiger Bestandteil des den Vermischungsbereich bildenden Elementes sein.

Gemäß einer ersten bevorzugten Ausführungsform ist der mechanische Schwingungsgeber mit dem Mischelement verbunden, das hierzu innerhalb des Mikrovermischer-Gehäuses bewegbar ist. Hiermit können die einzelnen Fluidlamellen relativ zu dem Bereich, wo die Fluidlamellen zusammengeführt werden, periodisch ausgelenkt werden.

Nach einer zweiten bevorzugten Ausführungsform ist der mechanische Schwingungsgeber mit dem den Spalt aufweisenden Element verbunden, das hierzu innerhalb des Gehäuses und relativ zum Mischelement bewegbar ist. Nach dieser Ausführungsform kann der Bereich, in dem die Fluidlamellen zusammengeführt werden, relativ zum Bereich, wo die einzelnen Fluidlamellen erzeugt werden, periodisch ausgelenkt werden.

Es ist auch denkbar, sowohl das Mischelement als auch das den Spalt aufweisende Element mit einem oder mehreren Schwingungsgebem zu verbinden. Bevorzugt sind hierbei das Mischelement und das den Spalt aufweisende Element phasenverschoben zueinander bewegbar. Besonders bevorzugt ist eine Phasenverschiebung um 180°. Hierbei kann die Bewegungsrichtung des Mischelements parallel, orthogonal oder in einem anderen Winkel zu der des Elementes sein, das den Spalt aufweist.

Der Mikrovermischer ist bevorzugt so ausgebildet, daß das Mischelement oder/und das den Spalt aufweisende Element parallel oder senkrecht zu der vorgegebenen Strömungsrichtung der Fluidlamellen bewegbar ist.

Gemäß einer Ausführungsform weist der mechanische Schwingungsgeber einen piezoelektrischen Aktuator auf. Es können jedoch auch andere mechanische Schwingungsgeber, beispielsweise elektromagnetische oder pneumatische Aktoren oder einen Exzenter aufweisende Motoren, eingesetzt werden. Der oder die Schwingungsgeber können in dem Mikrovermischer integriert sein. Bei einer Anordnung außerhalb des Mikrovermischers sind Elemente vorzusehen, die die mechanische Schwingung durch das Mikrovermischergehäuse hin zu den zu bewegenden Elementen weiterleiten.

Varianten des erfindungsgemäßen Verfahrens und des Mikrovermischers werden nachfolgend anhand von schematischen Zeichnungen näher erläutert.
Es zeigen:
- Fig. 1: das bekannte Prinzip des Aufspaltens zweier Fluidströme in Fluidlamellen,
- Fig. 2: das bekannte Prinzip des Aufspaltens eines Fluidstroms in Fluidlamellen und Zusammenführens mit einem Fluidstrom,
- Fig. 3: den Gehäuseboden, das Mischelement und den Gehäusedeckel eines bekannten Mikrovermischers getrennt voneinander in perspektivischer Darstellung,
- Fig. 4a: den bekannten Mikrovermischer nach Fig. 3 geschnitten durch die Ebene der Einlässe und des Auslasses,
- Fig. 4b: einen das Element mit Spalt darstellenden Ausschnitt aus Fig. 4a,
- Fig. 5: den Übergang von parallelen Fluidlamellen über sich fragmentierende Fluidlamellen zu Fluidteilchen nach einem Mikrovermischer nach Fig. 3,
- Fig. 6a: einen erfindungsgemäßen Mikrovermischer mit längs zum Spalt bewegbarem und an einem Ultraschallgeber gekoppelten Mischelement geschnitten von der Seite,
- Fig. 6b: den Mikrovermischer nach Fig. 6a mit abgenommenem Gehäusedeckel in Draufsicht,
- Fig. 6c: den Übergang von parallelen Fluidlamellen über sich fragmentierende Fluidlamellen zu Fluidteilchen nach dem Mikrovermischer nach Fig. 6a,
- Fig. 7a: einen erfindungsgemäßen Mikrovermischer mit quer zum Spalt bewegbarem und an einem Ultraschallgeber gekoppelten Mischelement geschnitten von der Seite,
- Fig. 7b: den Mikrovermischer nach Fig. 7a mit abgenommenem Gehäusedeckel in Draufsicht,
- Fig. 7c: den Übergang von parallelen Fluidlamellen über sich fragmentierende Fluidlamellen zu Fluidteilchen nach dem Mikrovermischer nach Fig. 7a,
- Fig. 8: Diagramm der mit dem erfindungsgemäßen Mikrovermischer nach Fig. 6a erhaltenen Teilchengrößenverteilung,
- Fig. 9: Diagramm der mit einem bekannten Mikrovermischer nach Fig. 3 erhaltenen Teilchengrößenverteilung.

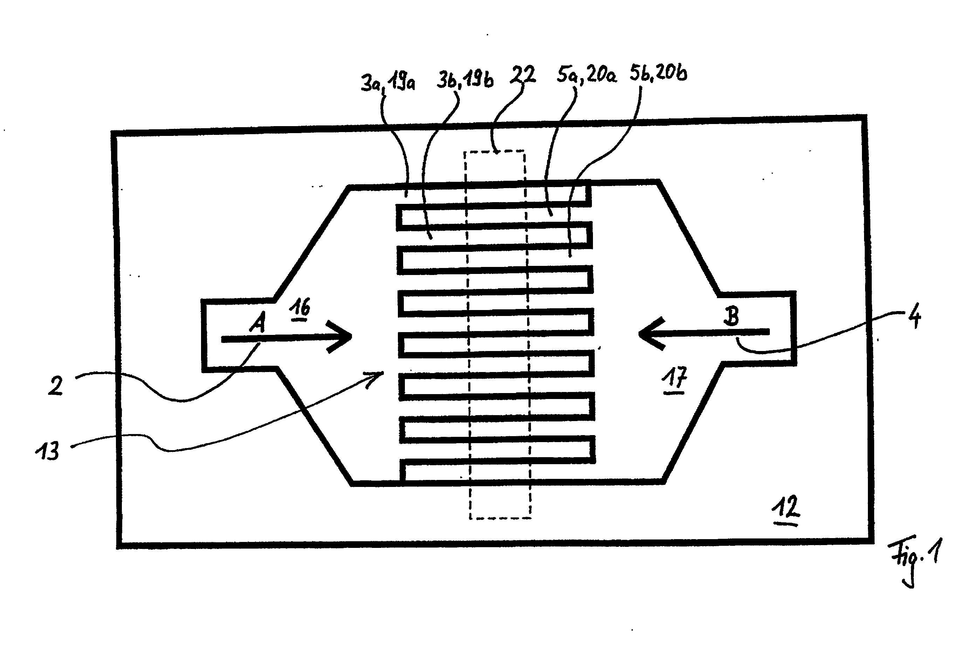

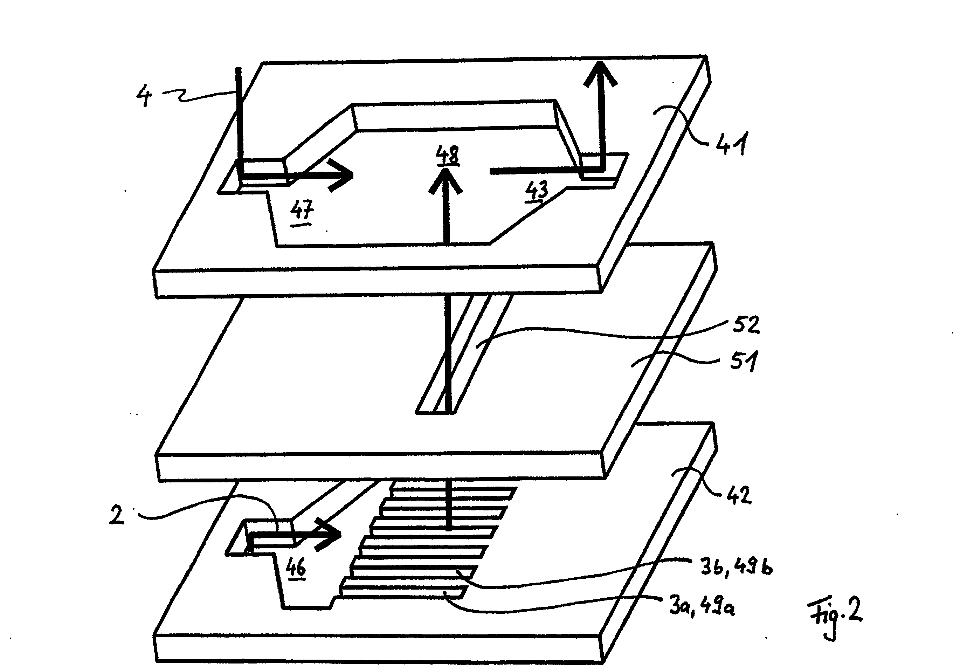

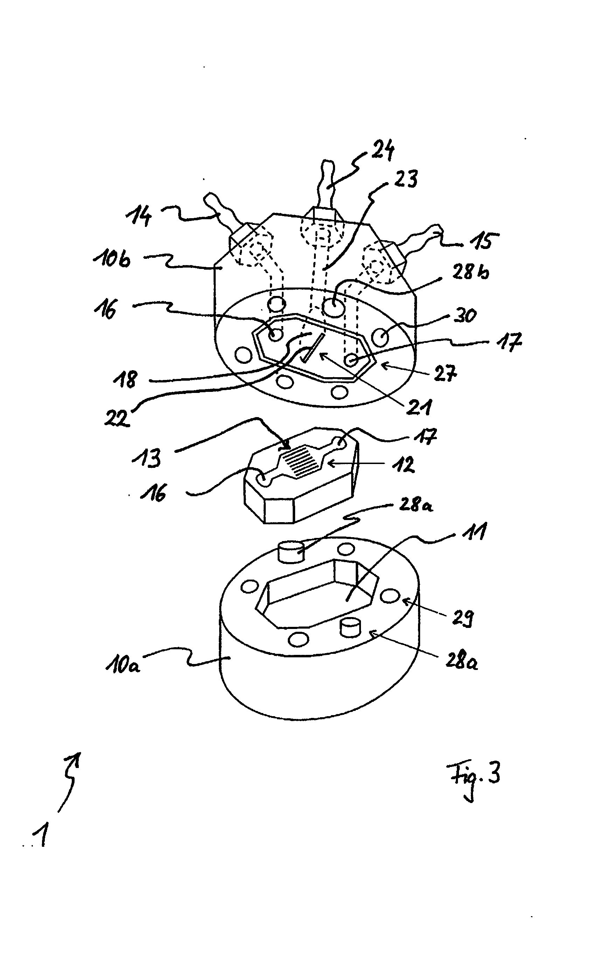

In Figur 1 ist ein bekanntes Prinzip zum Aufspalten zweier Fluidströme 2, 4 der Fluide A, B in Fluidlamellen 3a, 3b, ... bzw. 5a, 5b1 ... dargestellt. Hierzu ist in einem Mischelement 12 ein Bereich der Zuführung 16 des Fluids A in Kanäle 19a, 19b, ... zur Bildung von Fluidlamellen unterteilt. Ein gegenüberliegender Bereich der Zuführung 17 des Fluids B ist ebenfalls in Kanäle 20a, 20b, ... zur Bildung von Fluidlamellen unterteilt, wobei die Kanäle 20a, 20b, ... zwischen den Kanälen 19a, 19b, ... angeordnet sind und zusammen eine sogenannte Interdigitalstruktur 13 bilden. Oberhalb der Interdigitalstruktur 13 des Mischelementes 12 ist ein weiteres, hier nicht dargestelltes Element angeordnet, das alle Bereiche des Mischelements 12 bis auf einen über der Interdigitalstruktur 13 liegenden, hier mit gestrichelten Linien angedeuteten Spalt 22 abdeckt. Die Lamellen 3a, 3b, ..., 5a, 5b, ... der Fluide A und B strömen benachbart zueinander durch den Spalt in einen darüberliegenden, hier nicht dargestellten Vermischungsbereich.

Bei dem bekannten System Silikonöl-Wasser wurde gefunden, daß die Silikonöl-Fluidlamellen beim Zusammenführen mit den Wasser-Fluidlamellen zu Silikonöl-Tröpfchen fragmentieren und eine Emulsion von Silikonöl-Tröpfchen in einer kontinuierlichen Wasser-Phase erhalten wird. Diese Emulsionen waren bei Volumenverhältnissen von Wasser zu Dieselöl von größer 1 : 1 feindispers, bei kleineren Volumenverhältnissen jedoch mit sehr breiter Verteilung der Größen der Silikonöl-Tröpfchen.

Nach diesem Verfahren kann bei vorgegebener Geometrie des Mikrovermischers und festgelegten Volumenströmen die Größenverteilung der Teilchen und die Lage des Maximums der Teilchen nicht unmittelbar gewählt werden.

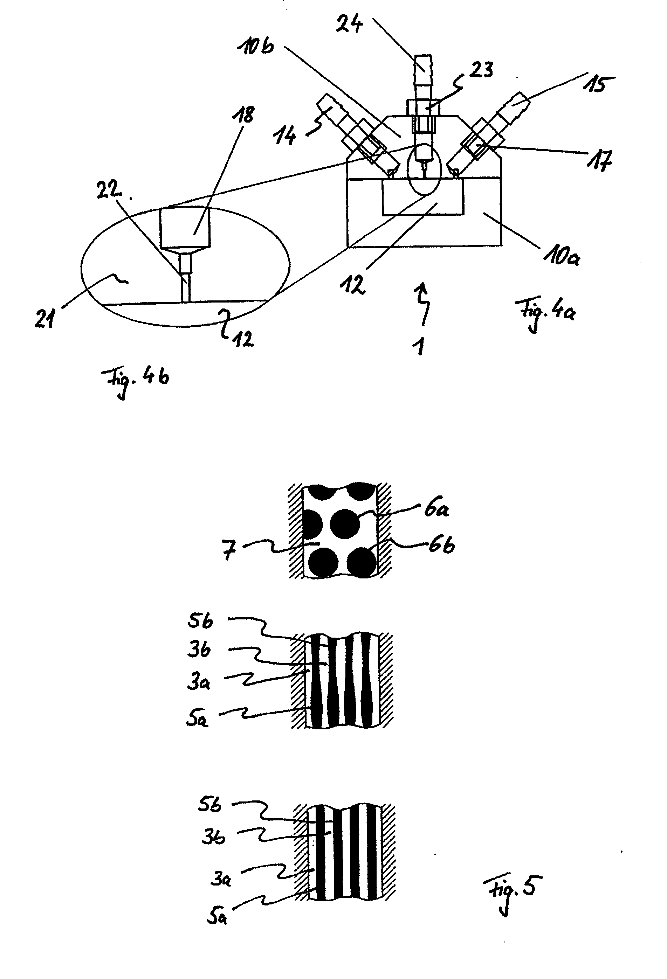

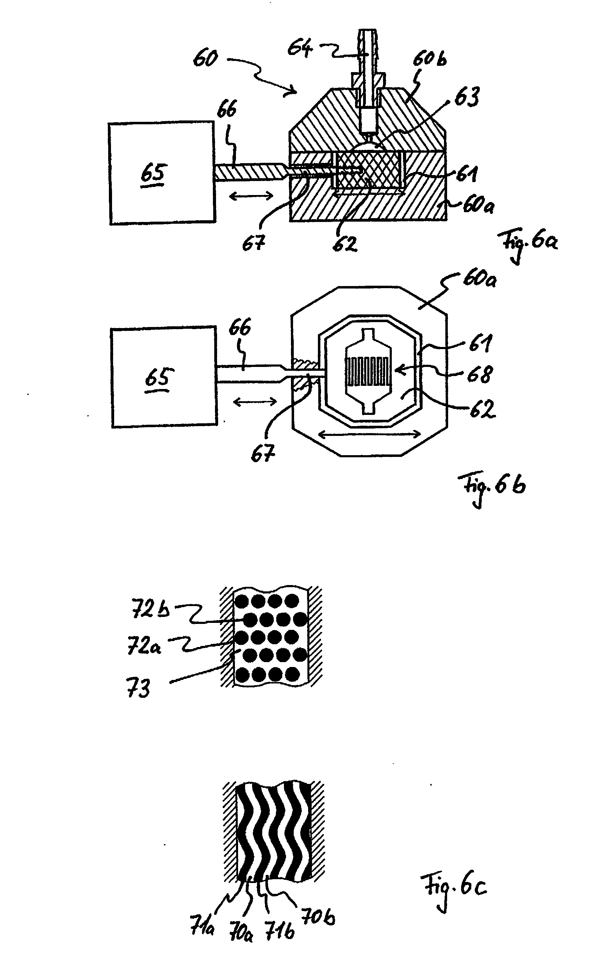

Nach einer anderen bekannten Verfahrensvariante wird nur der Strom des Fluids A in Fluidlamellen aufgespalten und diese in einen Fluidstrom B eingeleitet, wobei eine Fragmentation der einzelnen Fluidlamellen des Fluids A zu Teilchen stattfindet. Drei entsprechende Elemente 41, 42, 51 eines Mikrovermischers sind in Figur 2 schematisch voneinander getrennt und in perspektivischer Darstellung gezeigt. In dem Mischelement 42 befindet sich eine Zuführung 46 für den Fluidstrom A, der dem Element 42 durch eine hier nicht dargestellte Bohrung von unten zugeführt wird. Die Zuführung 46 ist im rechten Bereich in Kanäle 49a, 49b, ... zur Bildung von Fluidlamellen aufgeteilt. Auf diesem Element 42 ist ein Element 51 mit einem Spalt 52 derart angeordnet, daß der Spalt 52 sich über einen Bereich der Kanäle 49a, 49b, ... erstreckt. Auf dem Element 51 wiederum ist ein Element 41 mit einer Zuführung 47 für den Fluidstrom B, einem Vermischungsbereich 48 und einer Abführung 43 derart angeordnet, daß der Vermischungsbereich 48 sich oberhalb des Spalts 52 befindet. Der Übersichtlichkeit halber sind die Elemente 41, 42, 51 nicht aufeinander, sondern voneinander getrennt dargestellt. Die Zuführung 47 und der Vermischungsbereich 48 sind als durch das Element 41 hindurchgehende Ausnehmungen ausgebildet. Erst durch die Anordnung des Elements 41 auf dem Element 51 sowie durch eine hier nicht dargestellte, Durchgangsöffnungen für die Zu- und Abführung aufweisende Deckplatte, die auf dem Element 41 anzuordnen ist, werden aus dem Zuführungsbereich 47 und dem Vermischungsbereich 48 kammerartige Kanäle gebildet. Zur Erzielung eines über alle Kanäle 49a, 49b, ... gleichen Flusses sind Mikrokanäle ausreichenden Druckverlustes und ein Spalt 52 vorzusehen. Um eine Vereinigung der in den Kanälen 49a, 49b, ... erzeugten Fluidlamellen zu vermeiden, ist das Element 51 mit dem Spalt 52 in einer möglichst geringen Dicke, beispielsweise als geschlitzte Folie, ausgebildet. Es ist auch denkbar, einstatt eines quer über alle Kanäle 49a, 49b, ... verlaufenden Spaltes 52 Einzelspalte derart vorzusehen, daß diese jeweils genau über einem Kanal 49a, 49b, ... zu liegen kommen und die benachbarten Stegbereiche abdecken. Das Element 51 kann auch einstückiger Bestandteil des Elementes 41 sein.

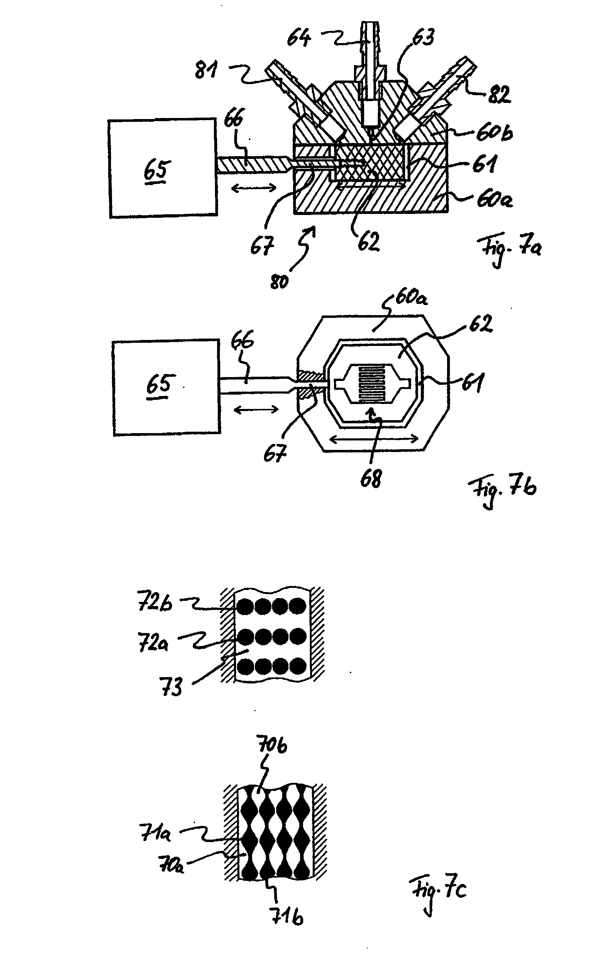

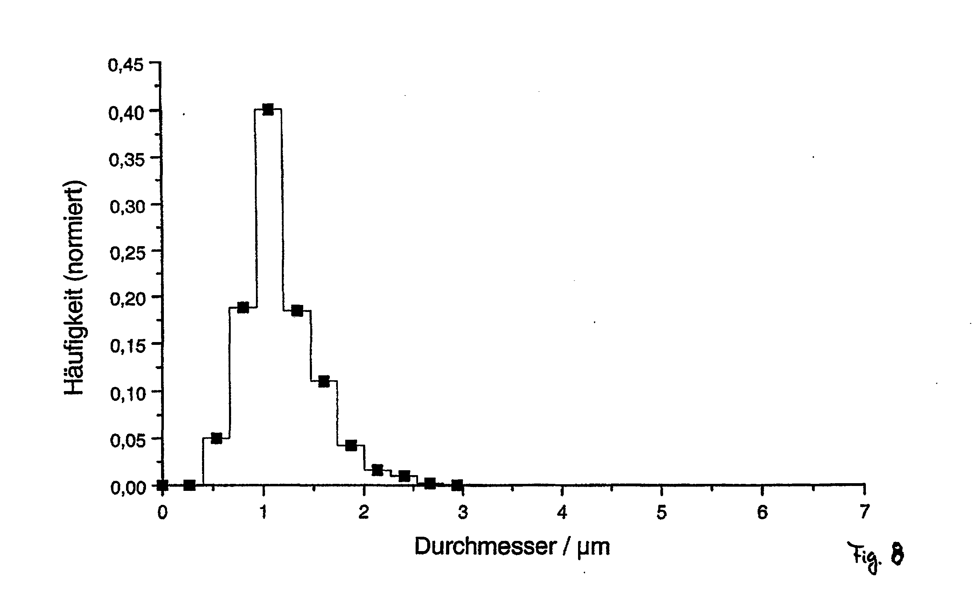

Ein bekannter Mikrovermischer 1, der nach dem zu Figur 1 erläuterten Prinzip arbeitet, ist in Figur 3 dargestellt, wobei der Übersichtlichkeit halber drei Teile, der Gehäuseboden 10a, das Mischelement 12 und der Gehäusedeckel 10b, getrennt voneinander perspektivisch dargestellt sind.
Das Mischelement 12 weist zwei Zuführungen 16 und 17 sowie eine zwischen beiden angeordnete Interdigitalstruktur 13 zur Bildung von Fluidlamellen auf. Das Mischelement 12 ist in eine entsprechende Ausnehmung 11 im Gehäuseboden 10a einsetzbar. Der Gehäusedeckel 10b weist zwei Einlässe 14, 15 auf, die in Bohrungen zur Zuführung 16, 17 übergehen, die der entsprechenden Zuführung 16, 17 des Mischelementes 12 gegenüberliegen. In den Boden des Gehäusedeckels 10b ist ein Element 21 mit einem Spalt 22 derart angeordnet, daß der Spalt 22 über der Interdigitalstruktur 13 des Mischelementes 12 zu liegen kommt. Im Gehäusedeckel 10b und oberhalb des Spalts 22 und mit diesem verbunden ist ein hier gestrichelt angedeuteter Vermischungsbereich 18 angeordnet, in dem die Fragmentation der Fluidlamellen zu den die Dispersion bildenden Teilchen stattfindet. Der Vermischungsbereich 18 geht in eine ebenfalls gestrichelt angedeutete Abführung 23 über, die mit dem Auslaß 24 verbunden ist. Zur Abdichtung zum Gehäuseboden 10a ist in den Boden des Gehäusedeckels 10b eine Ringnut 27 zur Aufnahme einer O-Ringdichtung eingearbeitet. Zur Positionierung von Gehäusedeckel 10b und -boden 10a zueinander weist der Gehäuseboden 10a auf seiner Oberseite zwei Paßstifte 28a auf, die in entsprechende Bohrungen 28b in der Unterseite des Gehäusedeckels 10b passen. Mittels vier hier nicht dargestellter Schrauben kann der Gehäusedeckel 10b gegen den Gehäuseboden 10a verspannt werden, wozu im Boden 10a vier mit Gewinde versehene Bohrungen 29 und im Gehäusedeckel 10b entsprechende vier Durchgangsbohrungen 30 vorgesehen sind.

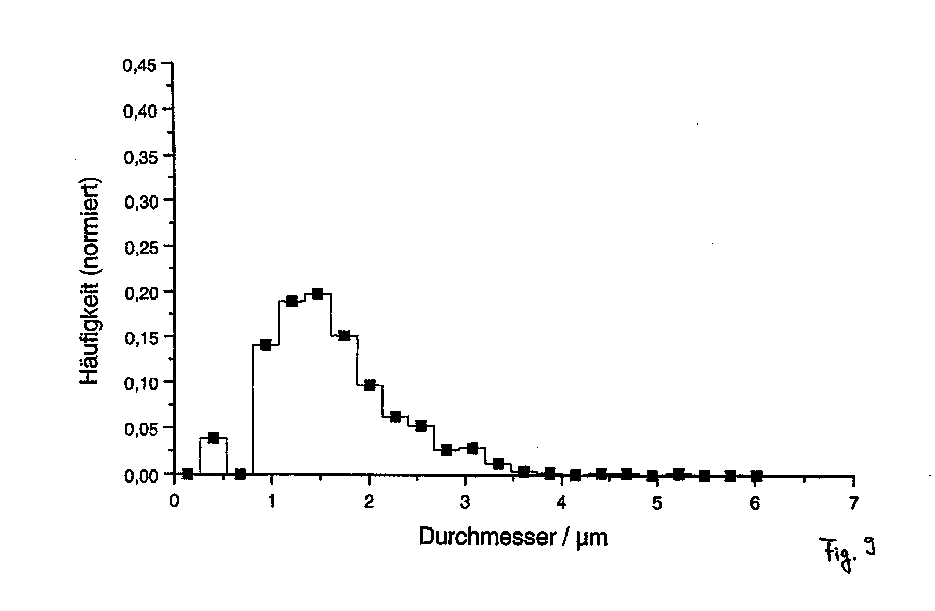

In Figur 4a ist der Mikrovermischer 1 nach Figur 3 geschnitten durch die die Einlässe 14, 15 und den Auslaß 24 erfassende Ebene dargestellt. Zur besseren Übersicht wurde auf die Darstellung von Details sowie eine Strichelung der geschnittenen Flächen verzichtet. Im Gegensatz zur Figur 3 sind der Gehäusedeckel 10b und der Gehäuseboden 10a mit eingesetztem Mischelement 12 verbunden miteinander dargestellt In Figur 4b ist ein den Spalt 22 und den sich anschließenden Vermischungsbereich 18 umfassender Ausschnitt dargestellt.

Die Bildung einer Dispersion am Beispiel von Teilchen 6a, 6b, ... eines Fluids A in einer kontinuierlichen Phase 7 des Fluids B ist in den drei Zeichnungen der Figur 5 schematisch vereinfacht dargestellt Unmittelbar hinter dem in den vorherigen Figuren dargestellten Spalt und im Vermischungsbereich liegen Fluidlamellen 3a, 3b, ... des Fluids A in einem Fluidstrom B vor, hier ebenfalls in Form von Fluidlamellen 5a, 5b, ... . In einem als Fragmentation bezeichneten Vorgang bilden sich in den Fluidlamellen 3a, 3b, ..., 5a, 5b, ... Bereiche mit in Strömungsrichtung variierender Dicke aus, was in der mittleren Zeichnung dargestellt ist. Dieser Vorgang findet schließlich seinen Abschluß in der Ausformung der Teilchen 6a, 6b, ... in einer kontinuierlichen Phase 7 des Fluids B (obere Zeichnung).

Der Vorgang der Fragmentation wird erfindungsgemäß gezielt durch die Anwendung von mechanischen Schwingungen, wie Ultraschall, unterstützt. Hierfür geeignete Mikrovermischer sowie die damit verbundenen Vorgänge der Fragmentation sind in den Figuren 6a-c und 7a-c dargestellt.

In der Figur 6a ist ein erfindungsgemäßer Mikrovermischer 60 mit einem mechanischen Schwingungsgeber in Form eines Ultraschallgebers 65 geschnitten von der Seite dargestellt. Die Schnittebene verläuft senkrecht zu der in der Figur 4a gezeigten Schnittebene und verläuft durch den Auslaß 64 und parallel durch den Spalt 63. Das Mischelement 62 ist in einer Ausnehmung 61 des Gehäusebodens 60a bewegbar angeordnet, wobei die mögliche Bewegungsrichtung durch den Doppelpfeil angedeutet ist. Das Mischelement 62 ist über einen Stift 66 mit dem hier nur schematisch angedeuteten Ultraschallgeber 65 verbunden, wobei der Stift durch eine Durchgangsöffnung 67 durch den Gehäuseboden 60a geführt Ist. Bis auf die mit der Bewegbarkeit des Mischelements 62 verbundenden Merkmale weist dieser Mikrovermischer 60 den gleichen Aufbau auf, wie der zuvor dargestellte Mikrovermischer 1.

Der Mikrovermischer 60 ist in Figur 6b mit entferntem Gehäusedeckel 60b in Draufsicht von oben dargestellt. Zu erkennen ist die Interdigitalstruktur 68 in dem Mischelement 62 zur Bildung der Fluidlamellen. Das Mischelement 62 ist so über den Stift 66 mit dem Ultraschallgeber 65 verbunden und so in der Ausnehmung 61 angeordnet, daß das Mischelement 62 senkrecht zur durch die Interdigitalstruktur 68 vorgegebenen Strömungsrichtung der Fluidlamellen und damit parallel zur Ausrichtung des Spalts 63 bewegbar ist

Wie die Bildung von Teilchen 72a, 72b, ... des Fluids A in einer kontinuierlichen Phase 73 des Fluids B in solch einem Mikrovermischer 60 erfolgt, ist in den zwei Zeichnungen der Figur 6c vereinfacht dargestellt. Aufgrund der periodischen Bewegung des Mischelements 62 verlaufen die Fluidlamellen des Fluids A 70a, 70b, ... und des Fluids B 71a, 71b, ... nicht geradlinig, sondern wellenförmig. Durch diesen wellenförmigen Verlauf, d.h. durch die regelmäßige Verschiebung der Fluidlamellen gegeneinander, ist der Vorgang der Fragmentation schon gezielt vorgegeben. Aus den seitlich gegeneinander verschobenen Lamellen bilden sich schließlich Fluidteilchen 72a, 72b, ... in einer kontinuierlichen Phase 73 des Fluids B.

Ein weiterer erfindungsgemäßer Mikrovermischer 80 mit bewegbarem Mischelement 62 ist in Figur 7a geschnitten von der Seite dargestellt. Die Schnittebene verläuft senkrecht zu der in Figur 6a gezeigten Schnittebene und sowohl durch die beiden Einlässe 81 und 82 als auch senkrecht zum Spalt 63. Zum einfacheren Vergleich wurden in den Figur 7a-c für Elemente mit gleicher Funktion die gleichen Bezugszeichen wie in Figur 6a-c verwendet. Wie auch aus der Figur 7b, in der der Mikrovermischer 80 mit abgenommenem Gehäusedeckel in Draufsicht dargestellt ist, zu erkennen ist, ist das Mischelement 62 in einer Ausnehmung 61 im Gehäuseboden 60a parallel zu der durch die Interdigitalstruktur 68 vorgegebenen Strömungsrichtung der Fluidlamellen bewegbar angeordnet und entsprechend über einen Stift 66 mit einem Ultraschallgeber 65 verbunden. Der Stift 66 wird in einer Durchgangsöffnung 67 im Gehäuseboden 60a geführt. Das Mischelement 62 kann also mit einer periodischen Bewegung parallel zur Strömungsrichtung und damit senkrecht zur Ausrichtung des Spalts 63 beaufschlagt werden.

Der Vorgang der Fragmentation hin zu Teilchen 72a, 72b, ... des Fluids A ist in den zwei Zeichnungen zur Figur 7c schematisch vereinfacht dargestellt. Die Bewegung des Mischelements 62 erfolgt parallel zur Strömungsrichtung der Fluidlamellen, d.h. die Interdigitalstruktur 68 wird unterhalb des Spalts 63 periodisch in Richtung der Zuführung des Fluids A und des Fluids B hin und her bewegt. Aufgrund der in den Kanälen der Interdigitalstruktur herrschenden Druckdifferenz wird bei der Auslenkung des Mischelements 62 in Richtung Zuführung des Fluids A ein größerer Volumenstrom an Fluidlamellen 70a, 70b, ... des Fluids A und bei Auslenkung in Richtung Zuführung des Fluids B ein größerer Volumenstrom an Fluidlamellen 71a, 71b, ... des Fluids B durch Spalt 63 geleitet. Die so resultierende Form der Fluidlamellen ist in der unteren Zeichnung in Figur 7c angedeutet. Die durch eine Abschnürung von Bereichen der Fluidlamellen gezielt vorgegebene Fragmentation führt zur Bildung einzelner Teilchen 72a, 72b, ... in einer kontinuierlichen Phase 73 des Fluids B.

### Ausführungsbeispiel

Mit dem erfindungsgemäßen Verfahren wurden Öl-in-Wasser-Emulsionen aus einer Wasserphase und einer Mischung aus Hartfett und Triglyceriden als Ölphase unter Verwendung des in Fig. 6a dargestellten Mikrovermischers 60 hergestellt. Die jeweils 15 Kanäle 19a, 19b, ..., 20a, 20b, ... in der Interdigitalstruktur 68 des Mischelements 62 wiesen eine Breite von 40 µm und eine Tiefe von 300 µm auf. Der über der Interdigitalstruktur 68 angeordnete Spalt 22 wurde mit einer Breite von 60 µm und einer Länge von 2 mm eingesetzt. Der Volumenfluß des Öl-Wasser-Flüssigkeitsstroms wurde mit 1,2 ml / h konstant gehalten. Es wurde ein Phasenverhältnis von Wasser zu Öl von 1,23 verwendet. Die Dispersion wurde mit einer konstanten Temperatur von 80 °C und unter Verwendung von 15 bis 20 Gew.-% eines Glycerolesters als Emulgator hergestellt. Mit dem Ultraschallgeber 65 wurde das Mischelement 62 zu einer Schwingung mit einer Amplitude von 10 bis 20 µm und einer Schwingungsfrequenz von 30 kHz angeregt.

Als Ergebnis dieses Ausführungsbeispiels wurde eine mittlere Teilchengröße von etwa 1,17 µm bei einer Standardabweichung von 0,36 µm erzielt, wie dies eine Darstellung der mit dem Lichtmikroskop gemessenen Teilchengrößenverteilung in Fig. 8 zeigt. Gemäß Figur 8 weisen damit 68,3 % der Tröpfchen eine Größe im Bereich von 1,17 µm ± 0,36 µm auf.

Zum Vergleich wurde mit gleichen Parametern, aber ohne Unterstützung der Fragmentation durch mechanische Schwingungen, mit dem bekannten Mikrovermischer 1 gemäß Fig. 3 eine Öl-in-Wasser-Emulsion hergestellt und analog zum beschriebenen Ausführungsbeispiel lichtmikroskopisch ausgewertet. Die Fig. 9 zeigt als Ergebnis die Teilchengrößenverteilung dieser Vergleichsmessung. Hierbei wird eine mittlere Teilchengröße von etwa 1,52 µm bei einer Standardabweichung von 0,66 µm bestimmt. Damit weisen gemäß Figur 9 68,3 % der Tröpfchen eine Größe im Bereich von 1,52 µm ± 0,66 µm auf.

Der direkte Vergleich der Fig. 8 mit der Fig. 9 verdeutlicht, daß mit dem erfindungsgemäßen Verfahren unter Verwendung des Mikrovermischers 60 gemäß Fig. 6a die Größenverteilung der die Dispersion bildenden Teilchen und die Lage des Maximums der Verteilung beeinflußbar ist.

### Bezugszeichenliste

- 1: Mikrovermischer
- 2: Fluidstrom A
- 3a, 3b, ...: Fluidlamelle des Fluids A
- 4: Fluidstrom B
- 5a, 5b, ...: Fluidlamelle des Fluids B
- 6a, 6b, ...: Teilchen Fluid A
- 7: kontinuierliche Phase Fluid B
- 10a: Gehäuseboden
- 10b: Gehäusedeckel
- 11: Ausnehmung
- 12: Mischelement
- 13: Interdigitalstruktur
- 14: Einlaß für Fluidstrom A
- 15: Einlaß für Fluidstrom B
- 16: Zuführung für Fluidstrom A
- 17: Zuführung für Fluidstrom B
- 18: Vermischungsbereich
- 19a, 19b, ...: Kanal für Fluidlamelle des Fluids A
- 20a, 20b, ...: Kanal für Fluidlamelle des Fluids B
- 21: Element mit Spalt
- 22: Spalt
- 23: Abführung
- 24: Auslaß
- 27: O-Ring-Nut
- 28a: Paßstift
- 28b: Bohrung
- 29: Bohrung mit Gewinde
- 30: Bohrung

- 41: Element mit Vermischungsbereich
- 42: Mischelement
- 43: Abführung
- 46: Zuführung für Fluidstrom A
- 47: Zuführung für Fluidstrom B
- 48: Vermischungsbereich
- 49a, 49b, ...: Kanäle für Fluidlamellen des Fluids A
- 51: Element mit Spalt
- 52: Spalt

- 60: Mikrovermischer
- 60a: Gehäuseboden
- 60b: Gehäusedeckel
- 61: Ausnehmung
- 62: Mischelement
- 63: Spalt
- 64: Auslaß
- 65: Ultraschallgeber
- 66: Stift
- 67: Durchgangsöffnung
- 68: Interdigitalstruktur
- 70a, 70b, ...: Fluidlamelle des Fluids A
- 71a, 71b, ...: Fluidlamelle des Fluids B
- 72a, 72b, ...: Teilchen des Fluids A
- 73: kontinuierliche Phase des Fluids B

- 80: Mikrovermischer
- 81: Einlaß für Fluidstrom des Fluids A
- 82: Einlaß für Fluidstrom des Fluids B

## Patentansprüche

1. Verfahren zur Herstellung einer Dispersion mindestens zweier Fluide A und B, bei dem das Größenverteilungsspektrum der die Dispersion bildenden Teilchen und die Lage des Maximums der Verteilung bei gegebener Strömungsgeschwindigkeit der Fluide beeinflußbar ist, das folgende Schritte umfaßt:
a) Aufspaltung eines Fluidstroms (2) des Fluids A in räumlich voneinander getrennte Fluidlamellen (3a, 3b, ...),
b) Zusammenführen der Fluidlamellen (3a, 3b, ...) des Fluids A mit mindestens einem Fluidstrom (4) des Fluids B, wobei die Fragmentation des Fluids A oder/und des Fluids B in die Dispersion bildende Teilchen (72a, 72b, ...) durch das Einleiten von in die zusammengeführten Fluidlamellen variierbaren, mechanischen Schwingungen initiiert und unterstützt wird, wobei das Einleiten derart erfolgt, daß den zusammengeführten Fluidlamellen ein wellenförmiger Verlauf verliehen wird.

2. Verfahren nach Anspruch 1, **dadurch gekennzeichnet, daß** vor dem Zusammenführen der Fluidstrom (4) des Fluids B in Fluidlamellen (5a, 5b, ...) aufgespalten wird, und daß anschließend jeweils eine Fluidlamelle (3a, 3b, ...) des Fluids A mit jeweils mindestens einer Fluidlamelle (5a, 5b, ...) des Fluids B zusammengeführt wird.

3. Verfahren nach Anspruch 1, **dadurch gekennzeichnet, daß** mehrere Fluidlamellen des Fluids A und mehrere Fluidlamellen des Fluids B derart gemeinsam in einen Raum geleitet werden, daß jeweils eine Fluidlamelle des Fluids A benachbart mit mindestens einer Fluidlamelle des Fluids b in diesen Raum austritt.

4. Verfahren nach einem der forherigen Ansprüche, **dadurch gekennzeichnet, daß** die Breite der Fluidlamellen des Fluids A oder /und des Fluids B < 300 µm, vorzugsweise < 50 µm, ist.

5. Verfahren nach einem der vorherigen Ansprüche, **dadurch gekennzeichnet, daß** die Höhe der Fluidlamellen des Fluids A oder/und des Fluids B größer gleich der Breite der entsprechenden Fluidlamellen, vorzugsweise > 300 µm, ist.

6. Verfahren nach einem der vorherigen Ansprüche, **dadurch gekennzeichnet, daß** die Fragmentation durch mechanische Schwingungen derart unterstützt wird, daß zumindest Bereiche der Fluidströme oder/und der Fluidlamellen des Fluids A oder/und des Fluids B oder/und des Dispersionstromes mechanisch mit Schwingung beaufschlagt werden.

7. Verfahren nach einem der vorherigen Ansprüche, **dadurch gekennzeichnet, daß** eine Dispersion mit Teilchen des Fluids A oder/und des Fluids B mit einer Größe von überwiegend 1 bis 100 µm hergestellt wird.

8. Verfahren nach einem der vorherigen Ansprüche, **dadurch gekennzeichnet, daß** die Frequenz der mechanischen Schwingungen bei gegebener Strömungsgeschwindigkeit des Fluids A und/oder des Fluids B im Hinblick auf die zu erzielende Teilchengröße gewählt wird.

9. Verfehlen nach einem der vorherigen Ansprüche, **gekennzeichnet durch** mechanische Schwingungen im Frequenzbereich von 1 kHz bis 100 kHz, vorzugsweise von 10 kHz bis 50 kHz.

10. Mikrovermischer (60, 80) zur Herstellung von Dispersionen mindestens zweier Fluide A und B
- mit einem Gehäuse (60a, 60b) mit mindestens zwei Einlässen (81, 82) für die Fluide A und B sowie mindestens einem Auslaß (64) für die Dispersion,
- mit mindestens einem Mischelement (62), das eine Struktur zum Aufspalten mindestens des Fluidstroms (2) des Fluids A in Fluidlamellen (3a, 3b, ...) aufweist,
- mit mindestens einem Vermischungsbereich zum Zusammenführen der Fluidlamellen (3a, 3b, ...) des Fluids A mit dem Fluidstrom des Fluids B und
- mit mindestens einem in seiner Frequenz, Amplitude, Schwingungsebene und/oder Energie einstellbaren, mechanischen Schwingungsgeber (65) zur Beaufschlagung des Teils des Mikrovermischers mit Schwingungen, in dem die Bildung der Fluidlamellen erfolgt oder/und in dem die Fluidlamellen unterschiedlicher Art zusammengeführt werden.

11. Mikrovermischer (60, 80) nach Anspruch 10, **dadurch gekennzeichnet, daß** das Mischelement (62) ebenfalls eine Struktur zum Aufspalten des Fluidstroms (4) des Fluids B in Fluidlamellen (5a, 5b, ...) aufweist, wobei der Vermischungsbereich zum Zusammenführen von Fluidlamellen (3a, 3b, ...) des Fluids A mit Fluidlamellen (5a, 5b, ...) des Fluids B ausgebildet ist.

12. Mikrovermischer (60, 80) nach Anspruch 11, **dadurch gekennzeichnet, daß** das Mischelement (62) eine aus Kanälen (19a, 19b, ..., 20a, 20b, ...) für die Führung der Fluidlamellen (3a, 3b, ..., 5a, 5b, ...) des Fluids A und des Fluids B gebildete interdigitale Struktur (68) aufweist.

13. Mikrovermischer (60, 80) nach einem der Ansprüche 10 bis 12, **dadurch gekennzeichnet, daß** das Mischelement (62) über ein Element, das einen quer zu den Fluidlamellen angeordneten Spalt (63) aufweist, mit dem Vermischungsbereich verbunden ist.

14. Mikrovermischer (60, 80) nach einem der Ansprüche 10 bis 13, **dadurch gekennzeichnet, daß** der mechanische Schwingungsgeber (65) mit dem Mischelement (62) verbunden ist, welches innerhalb des Gehäuses (60a, 60b) des Mikrovermischers (60, 80) bewegbar ist.

15. Mikrovermischer nach einem der Ansprüche 10 bis 13, **dadurch gekennzeichnet, daß** der mechanische Schwingungsgeber mit dem den Spalt aufweisenden Element verbunden ist, welches relativ zum Mischelement innerhalb des Gehäuses des Mikrovermischers bewegbar ist.

16. Mikrovermischer (60, 80) nach Anspruch 14 oder 15, **dadurch gekennzeichnet, daß** das Mischelement (62) oder/und das den Spalt aufweisende Element parallel oder senkrecht zu der vorgegebenen Strömungsrichtung der Fluidlamellen (3a, 3b, ..., 5a, 5b, ...) bewegbar ist.

17. Mikrovermischer nach einem der Ansprüche 10 bis 16, **dadurch gekennzeichnet, daß** der mechanische Schwingungsgeber einen piezoelektrischen Aktuator aufweist,

## Claims

1. A method for producing a dispersion of at least two fluids A and B, wherein the size distribution spectrum of the particles forming the dispersion and the position of the maximum of distribution can be influenced at a given flow rate of the fluids, comprises the following steps :
a) splitting a fluid stream (2) of the fluid A into spatially separated fluid lamellae (3a, 3b, ...),
b) bringing together the fluid lamellae (3a, 3b, ...) of the fluid A with at least one fluid stream (4) of the fluid B, whereby fragmentation of the fluid A or/and of the fluid B into the particles (72a, 72b, ...) making up the dispersion is initiated and supported by the introduction of mechanical oscillations, variable in the combined fluid lamellae, whereby said introduction occurs such that a wave-like trajectory is imparted to the combined fluid lamellae.

2. The method as claimed in Claim 1, **characterised in that** before the streams are combined the fluid stream (4) of the fluid B is split into fluid lamellae (5a, 5b, ...), and that then one fluid lamella (3a, 3b, ...) of the fluid A is combined in each case with at least one fluid lamella (5a, 5b, ...) of the fluid B.

3. The method as claimed in Claim 1, **characterised in that** several fluid lamellae of the fluid A and several fluid lamellae of the fluid B are fed commonly into a space, such that in each case one fluid lamella of the fluid A emerges adjacent to at least one fluid lamella of the fluid B in this space.

4. The method as claimed in any one of the foregoing claims, **characterised in that** the width of the fluid lamellae of the fluid A or/and of the fluid B < 300 µm is preferably < 50 µm.

5. The method as claimed in any one of the foregoing claims, **characterised in that** the height of the fluid lamellae of the fluid A or/and of the fluid B is greater than the width of the corresponding fluid lamellae, preferably > 300 µm.

6. The method as claimed in any one of the foregoing claims, **characterised in that** fragmentation is supported by mechanical oscillations, such that at least areas of the fluid flows or/and of the fluid lamellae of the fluid A or/and of the fluid B or/and of the dispersion stream are supplied mechanically with oscillation.

7. The method as claimed in any one of the foregoing claims, **characterised in that** a dispersion is produced with particles of the fluid A or/and of the fluid B of predominantly 1 to 100 µm in size.

8. The method as claimed in any one of the foregoing claims, **characterised in that** the frequency of the mechanical oscillations at the given flow rate of the fluid A and/or of the fluid B is selected with respect to the targeted particle size.

9. The method as claimed in any one of the foregoing claims, **characterised by** mechanical oscillations in the frequency range of 1 kHz to 100 kHz, preferably from 10 kHz to 50 kHz.

10. A micromixer (60, 80) for producing dispersions of at least two fluids A and B
- with a housing (60a, 60b) having at least two inlets (81, 82) for the fluids A and B and at least one outlet (64) for dispersion,
- with at least one mixer element (62), having a structure for splitting at least the fluid stream (2) of the fluid A into fluid lamellae (3a, 3b, ...),
- with at least one mixing region for combining the fluid lamellae (3a, 3b, ...) of the fluid A with the fluid stream of the fluid B and
- with at least one mechanical oscillator (65), adjustable in its frequency, amplitude, oscillation plane and/or power, for supplying the part of the micromixer with oscillations, in which the fluid lamellae are formed or/and in which the fluid lamellae of varying types are combined.

11. The micromixer (60, 80) as claimed in Claim 10, **characterised in that** the mixer element (62) likewise has a structure for splitting the fluid stream (4) of the fluid B into fluid lamellae (5a, 5b, ...), whereby the mixing region is designed to combine fluid lamellae (3a, 3b, ...) of the fluid A with fluid lamellae (5a, 5b, ...) of the fluid B.

12. The micromixer (60, 80) as claimed in Claim 11, **characterised in that** the mixer element (62) has an interdigital structure (68) formed from channels (19a, 19b, ..., 20a, 20b, ...) for guiding the fluid lamellae (3a, 3b, ..., 5a, 5b, ...) of the fluid A and of the fluid B.

13. The micromixer (60, 80) as claimed in any one of Claims 10 to 12, **characterised in that** the mixer element (62) is connected via an element, which has a gap (63) arranged transverse to the fluid lamellae, to the mixing region.

14. The micromixer (60, 80) as claimed in any one of Claims 10 to 13, **characterised in that** the mechanical oscillator (65) is connected to the mixer element (62), which can be moved inside the housing (60a, 60b) of the micromixer (60, 80).

15. The micromixer as claimed in any one of Claims 10 to 13, **characterised in that** the mechanical oscillator is connected to the element having the gap, which can be moved relative to the mixer element inside the housing of the micromixer.

16. The micromixer (60, 80) as claimed in Claim 14 or 15, **characterised in that** the mixer element (62) or/and the element having the gap can be moved parallel or vertically to the preset flow direction of the fluid lamellae (3a, 3b, ..., 5a, 5b, ...).

17. The micromixer as claimed in any one of Claims 10 to 16, **characterised in that** the mechanical oscillator has a piezoelectric actuator.

## Revendications

1. Procédé pour la fabrication d'une dispersion d'au moins deux fluides A et B, dans lequel le spectre de répartition dimensionnelle des particules formant la dispersion et la position du maximum de la répartition à une vitesse d'écoulement donnée des fluides sont influençables et qui comprend les étapes suivantes :
a) séparation d'un courant (2) du fluide (A) en lamelles de fluide (3a, 3b,...) séparées spatialement,
b) rassemblement des lamelles (3a, 3b,..) du fluide A avec au moins un courant (4) du fluide B, la fragmentation du fluide A et/ou du fluide B étant initiée et assistée dans la dispersion des particules en formation (72a, 72b,...) par l'introduction s'effectuant par les vibrations mécaniques variables assemblées dans les lamelles de fluide, l'introduction s'effectuant de manière à conférer une forme ondulée aux lamelles de fluide rassemblées.

2. Procédé selon la revendication 1, **caractérisé en ce qu'**avant le rassemblement, le courant (4) du fluide (B) est fractionné en lamelles de fluide (5a, 5b,...) et **en ce qu'**ensuite une lamelle (3a, 3b, ...) du fluide A est rassemblée à au moins une lamelle (5a, 5b, ...) du fluide B.

3. Procédé selon la revendication 1, **caractérisé en ce que** plusieurs lamelles du fluide A et plusieurs lamelles du fluide B sont dirigées ensemble dans un espace de manière qu'une lamelle du fluide A voisine avec au moins une lamelle du fluide B débouche dans cet espace.

4. Procédé selon l'une des revendications précédentes, **caractérisé en ce que** la largeur des lamelles du fluide A et/oud u fluide B est inférieure à 300 µm, de préférence inférieure à 50 µm.

5. Procédé selon l'une des revendications précédentes, **caractérisé en ce que** la hauteur des lamelles du fluide A et/ou du fluide B est supérieure ou égale à la largeur des lamelles de fluide correspondantes, de préférence supérieure à 300 µm.

6. Procédé selon l'une des revendications précédentes; **caractérisé en ce que** la fragmentation est favorisée par des vibrations mécaniques de telle sorte qu'au moins des zones des courants et/ou des lamelles du fluide A et/ou du fluide B et/ou du courant de dispersion subissent mécaniquement l'impact de vibrations.

7. Procédé selon l'une des revendications précédentes, **caractérisé en ce qu'**une dispersion est réalisée ave des particules du fluide A et/ou du fluide B d'une taille comprise principalement entre 1 et 100 µm.

8. Procédé selon l'une des revendications précédentes, **caractérisé en ce que** la fréquence des vibrations mécaniques est sélectionnée par rapport à la taille des particules à atteindre en présence d'une vitesse d'écoulement du fluide A et/ou du fluide B.

9. Procédé selon l'une des revendications précédentes, **caractérisé par** des vibrations mécaniques comprises dans la plage de fréquences de 1 kHz à 100 kHz, de préférence de 10 kHz à 50 kHz.

10. Micromélangeur (60, 80) pour la fabrication de dispersion d'au moins deux fluides A et B,
- comprenant un boîtier (60a, 60b) avec au moins deux entrées (81, 82) pour les fluides A et B ainsi qu'au moins une sortie (64) pour la dispersion,
- comprenant au moins un élément de mélange (62) qui présente une structure pour le fractionnement d'au moins un courant (2) du fluide A en lamelles de fluide (3a, 3b, ...),
- comprenant au moins une zone de mélange pour le rassemblement des lamelles (3a, 3b, ...) du fluide A avec le courant de fluide B et
- comprenant au moins un générateur mécanique de vibrations (65) dont la fréquence, l'amplitude, le plan de vibration t/ou l'énergie sont réglables pour appliquer des vibrations sur la partie du micromélangeur dans laquelle s'effectue la vibration des lamelles de fluide et/ou dans laquelle sont rassemblées des lamelles de fluide de type différent.

11. Micromélangeur (60, 80) selon la revendication 10, **caractérisé en ce que** l'élément de mélange (62) présente une structure pour la fragmentation du curant (4) du fluide B en lamelle de fluide (5a, 5b, ...), la zone de mélange étant réalisée pour le rassemblement de lamelles (3a, 3b, ...) du fluide A avec des lamelles (5a, 5b,...) du fluide B.

12. Micromélangeur (60, 80) selon la revendication 11, **caractérisé en ce que** l'élément de mélange (62) présente une structure (68) interdigitale composée de canaux (19a, 19b, ..., 20a, 20b,...) pour le guidage des lamelles (3a, 3b, ..., 5a, 5b,...) du fluide a et du fluide B.

13. Micromélangeur (60, 80) selon l'une des revendications 10 à 12, **caractérisé en ce que** l'élément de mélange (62) est relié à la zone de mélange par un élément qui présente une fente (63) disposée transversalement aux lamelles de fluide.

14. Micromélangeur (60, 80) selon l'une des revendications 10 à 13, **caractérisé en ce que** le générateur mécanique de vibrations (65) est relié à l'élément mélangeur (62) qui est mobile à l'intérieur du boîtier (60a, 60b) du micromélangeur (60, 80).

15. Micromélangeur selon l'une des revendications 10 à 13, **caractérisé en ce que** le générateur mécanique de vibrations est relié à l'élément présentant la fente, élément qui est mobile à l'intérieur du boîtier du micromélangeur par rapport à l'élément mélangeur.

16. Micromélangeur (60, 80) selon la revendication 14 ou 15, **caractérisé en ce que** l'élément mélangeur (62) et/ou l'élément présentant la fente est mobile parallèlement ou perpendiculairement à la direction d'écoulement prescrite des lamelles de fluide (3a, 3b, ...., 5a, 5b, ...).

17. Micromélangeur selon l'une des revendications 10 à 16, **caractérisé en ce que** le générateur mécanique de vibrations présente un actionneur piézoélectrique.
